(19) **Europäisches Patentamt**

**European Patent Office**

**Office européen des brevets**

(11) **EP 1 095 247 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(21) Anmeldenummer: **99934546.5**

(22) Anmeldetag: **30.06.1999**

(51) Int Cl.:
*G01J 3/46* (2006.01)      *G01B 11/30* (2006.01)
*G01N 21/57* (2006.01)

(86) Internationale Anmeldenummer:
**PCT/EP1999/004497**

(87) Internationale Veröffentlichungsnummer:
**WO 2000/003212 (20.01.2000 Gazette 2000/03)**

(54) **VERFAHREN ZUR BESTIMMUNG RICHTUNGSABHÄNGIGER EIGENSCHAFTEN VON LACKIERUNGEN**

METHOD FOR DETERMINING DIRECTION-DEPENDENT PROPERTIES OF PAINT LACQUERS

PROCEDE PERMETTANT DE DETERMINER DES PROPRIETES DE LAQUAGES DEPENDANTES DU SENS

(84) Benannte Vertragsstaaten:
**DE ES FR**

(30) Priorität: **09.07.1998 DE 19830745**

(43) Veröffentlichungstag der Anmeldung:
**02.05.2001 Patentblatt 2001/18**

(73) Patentinhaber: **BASF Coatings Aktiengesellschaft 48165 Münster (DE)**

(72) Erfinder:
• **DUSCHEK, Wolfgang**
  **D-48165 Münster (DE)**
• **BIALLAS, Bernd**
  **D-48324 Albesloh (DE)**

(74) Vertreter: **Fitzner, Uwe**
**Dres. Fitzner & Münch**
**Rechts- und Patentanwälte**
**Hauser Ring 10**
**40878 Ratingen (DE)**

(56) Entgegenhaltungen:
EP-A- 0 350 891      DE-A- 19 709 406
DE-C- 19 605 520     DE-C- 19 611 062
US-A- 5 500 274      US-A- 5 597 861

**Beschreibung**

Die vorliegende Erfindung betrifft ein Verfahren zur Bestimmung richtungsabhängiger Eigenschaften von Lackierungen, bei welchem an einer Probelackierung entlang eines Prüfpfades mit einem oder mehreren Meßgeräten Messungen von Lackeigenschaften durchgeführt werden.

Für die Entwicklung und Qualitätskontrolle von Lacken und Anstrichstoffen ist es erforderlich, die damit erzielbaren Beschichtungen auf verschiedene Eigenschaften hin zu untersuchen. Zu diesem Zweck werden Probelackierungen hergestellt, für die sich die Bezeichnung "Prüftafel" eingebürgert hat, da der probeweise beschichtete Gegenstand in der Regel plattenförmig ist.

Die mit Hilfe von Prüftafeln untersuchten Eigenschaften betreffen ein breites Spektrum relevanter Eigenschaften der Beschichtung. Hierzu gehören zum einen die optischen Eigenschaften und hierbei insbesondere die Farbeigenschaften der Beschichtung (Farbton, Glanz, Verlauf, Effekteigenschaften, Haze, Deckvermögen). Zum anderen interessieren die mechanischen Eigenschaften, wie z.B. Härte der Beschichtung, Haftung am Untergrund und Elastizität. Schließlich interessieren weitere physikalische Eigenschaften wie das Diffusionsvermögen fremder Stoffe in der Schicht, die elektrische Leitfähigkeit der Schicht, das UV-Absorptionsvermögen, die Flammschutzwirkung sowie die Beständigkeit der Schicht unter Praxisbeanspruchungen.

Für die effiziente Vermessung der Prüftafeln sind verschiedenen Verfahren entwickelt worden. So beschreibt die DE-196 40 376.6 ein automatisiertes Verfahren zur Vermessung von lackierten Prüftafeln. Dabei werden von einem Roboter verschiedene Meßgeräte entlang vorgegebener Prüfpfade über die Prüftafel geführt und die gewonnenen Meßwerte elektronisch erfaßt. Die Ermittlung der Schichtdicken-Abhängigkeit von verschiedenen Parametern in einem einzigen Meßvorgang ist das Ziel der DE 196 05 520 C1. Zu diesem Zweck wird eine keilförmige Lackschicht aufgetragen und entlang eines gitterförmigen Rasters werden jeweils sowohl die Schichtdicke als auch die optischen Größen vermessen.

US5500274 offenbart eine Messung der optischen Dichte einer Lackschicht, die zwei Regionen von gleicher Dicke, aber mit unterschiedlichen Vorzeichen entlang eines Prüfpfads aufweist. Gemäß D2 wird eine Messung der optischen Dichte durchgeführt im wesentlichen in einer Richtung senkrecht zur Lackebene.

DE19611062 offenbart ein Verfahren, wobei zwei Schichten mit im rechten Winkel zueinander angeordneten Schichtdickengradienten appliziert werden. Über die Oberfläche verteilt werden, durch verteilte verschiedene Messpunkte jeweils eine oder mehrere den visuellen Eindruck beeinflussende Oberflächeneigenschaften einer Lackschicht auf einem Prüfblech gemessen. Die zwei Schichten sind keilförmig ausgebildet und liegen quer zueinander.

Die genannten Verfahren haben indes den Nachteil, daß sie die Richtungsabhängigkeit der Messungen nicht ausreichend berücksichtigen. Z.B. bei Effektlackierungen, wie sie in großem Umfang in der Automobillackierung verwendet werden, spielt jedoch die Winkelabhängigkeit optischer Eigenschaften ein wichtige Rolle. Für die Aussagekraft der Meßwerte ist es daher unerläßlich, daß berücksichtigt wird, unter welchen Winkelverhältnissen relativ zur Schichtoberfläche sie gemessen wurden, und daß genügend Meßwerte gewonnen werden, aus denen funktionale Zusammenhänge erkennbar sind.

Bei einer veränderlichen Schichtdicke kann es darüber hinaus wichtig sein, wie die Meßrichtung relativ zum Schichtdickegradienten liegt. Diese gegenseitige Abhängigkeit von Meßrichtung und Schichtdickegradienten wird bei keinem der Verfahren nach dem Stand der Technik berücksichtigt und erst recht nicht effizient erfaßt.

Die vorliegende Erfindung hat sich demgegenüber die Aufgabe gestellt, die Nachteile des Standes der Technik zu vermeiden und ein effizient, einfach und gegebenenfalls auch automatisch durchzuführendes Verfahren zur Verfügung zu stellen, mit welchem in einem Meßdurchgang richtungsabhängige Meßwerte sowie eine Abhängigkeit der Meßwerte vom Schichtdickegradienten erfaßt werden können.

Diese Aufgabe wird durch ein Verfahren gelöst, bei welchem an einer Probelackierung entlang eines Prüfpfades mit einem oder mehreren Meßgeräten Messungen von Lackeigenschaften durchgeführt werden. Mindestens ein Meßwert soll richtungsbezogen erfaßt werden, d.h. er hängt ab von dem relativen Winkel zwischen der Meßrichtung und einer zweiten Richtung, z.B. der Lackoberfläche und/oder dem Schichtdickegradienten. Der Schichtdickegradient ist dabei eine zweidimensionale Größe (Vektor), die in Richtung des steilsten Zuwachses der Schichtdicke weist.

Weiterhin ist der Verlauf der Probelackierung und des Prüfpfades derart, daß es mindestens eine Schichtdicke der Probelackierung gibt, die mindestens zweimal und dabei mit verschiedenen Schichtdickegradienten entlang des Prüfpfades auftritt. Während der Messung entlang des Prüfpfades wird also einmal eine Schichtdicke $SD_0$ durchlaufen, in der ein bestimmter Schichtdickegradient $\underline{G}_1$ (Anwachsen oder Abnehmen der Schichtdicke) vorliegt, und diese Schichtdicke $SD_0$ wird später ein zweites Mal unter einem anderen Schichtdickegradienten $\underline{G}_2$ durchlaufen.

Das erfindungsgemäße Verfahren hat den Vorteil, daß in einem einzigen Meßdurchgang (Messung entlang des Prüfpfades) für mindestens eine Schichtdicke $SD_0$ Meßwerte unter verschiedenen Winkeln zwischen Meßrichtung und Schichtdickegradienten $\underline{G}$ durchgeführt werden. Eine gegenseitige Abhängigkeit dieser Richtungen, die zu meßbaren Differenzen führt, wird dabei sofort erkannt. Dies ist z.B. wichtig für viele optische Eigenschaften von Effektlackierungen, bei denen derartige Abweichungen nicht erwünscht sind.

Vorzugsweise haben die entsprechenden Schichtdickegradienten - unterschiedliches Vorzeichen, d.h. sie zeigen zu verschiedenen Seiten des Raumes und sind betragsmäßig gleich groß ($\underline{G}_1 = -\underline{G}_2$). Damit wird bei Konstanz sonstiger Bedingungen die reine Richtungsabhängigkeit der interessierenden Meßgröße vom Schichtdickegradienten erfaßt.

Die Schichtdicke entlang des Prüfpfades wird im einfachsten Falle ein Minimum oder ein Maximum haben, d.h. muldenförmig oder bergförmig verlaufen. Da sich die Schichtdicke stetig ändert, werden um das Minimum/Maximum herum alle Schichtdicken von einem kontinuierlichen Prüfpfad zweimal und mit verschiedenen Gradienten durchlaufen.

Insbesondere kann sich die Schichtdicke entlang des Prüfpfades symmetrisch ändern, d.h., daß die Schichtdicke aufgetragen als Funktion des Ortes eine spiegelsymmetrische Kurve ergibt. Spezielle symmetrische Verläufe dieser Art sind z.B. glocken- oder parabelförmig.

Eine Probelackierung der genannten Art mit Symmetrie und einem Dickemaximum kann z.B. durch Sprühen entlang einer Geraden hergestellt werden. Durch die normale Verteilung des Sprühnebels mit abnehmender Lackdicke an den Rändern des Auftrags kommt es nämlich zwangsläufig zu einem Schichtdickeprofil, das quer zur Sprührichtung glockenförmig verläuft. Derartige Probelackierungen können also mit herkömmlichen Verfahren und Automaten hergestellt werden.

Der Prüfpfad kann einen sehr allgemeinen Verlauf haben. Unter dem Ausdruck "Prüfpfad" wird ganz allgemein die zeitlich geordnete Reihenfolge der Meßorte verstanden. Der Prüfpfad entspricht der Bahn, auf der die Meßgeräte über die Probelackierung gefahren werden, wobei allerdings nur die Orte, an denen Messungen stattfinden, letztendlich relevant sind.

Aus Gründen der Einfachheit und der maschinellen Führbarkeit der Meßgeräte wird der Prüfpfad in der Regel ohne Umkehrpunkte verlaufen und im einfachsten Falle geradlinig sein.

Mit dem erfindungsgemäßen Verfahren können u.a. Schichtdicke, Verlauf, Farbton, Haze und/oder Glanz der Probelackierung gemessen werden. Besonders bevorzugt ist es, zu allen Meßwerten die Schichtdicke mit zu erfassen, um die Abhängigkeit dieser Werte von der Schichtdicke zu ermitteln. Außerdem können dann das Vorliegen vergleichbarer Schichtdicken und die Schichtdickegradienten zu den Meßwerten kontrolliert werden. Wenn der Schichtdickenverlauf der Probelackierung indes hinreichend konstant und reproduzierbar ist, kann u.U. auf ein derartiges Nachmessen verzichtet werden und die Schichtdicke indirekt aus dem Ort der Messung erschlossen bzw. abgeschätzt werden.

Im folgenden wird die Erfindung anhand der Figuren beispielhaft erläutert.

Fig. 1 zeigt perspektivisch die erfindungsgemäße Messung.

Fig. 2 zeigt die Schichtdicke als Funktion des Meßweges.

Fig.3 zeigt gemessene Helligkeitswerte in Abhängigkeit von der Schichtdicke.

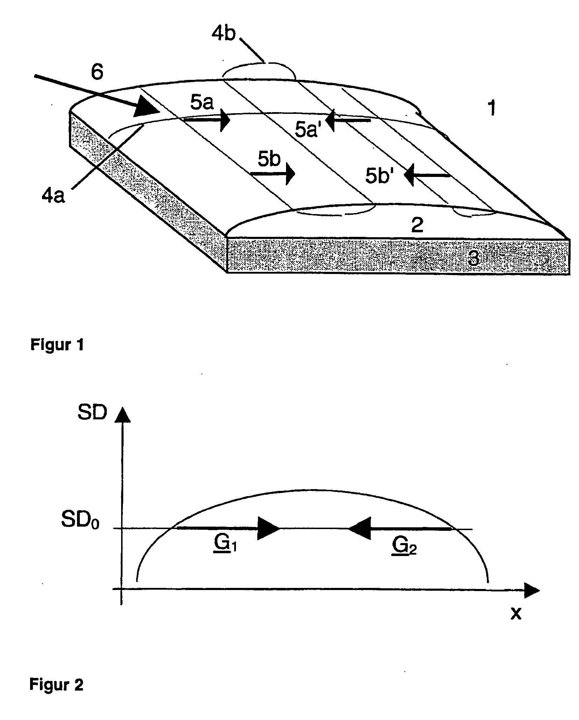

Figur 1 zeigt in einer Perspektive das Prinzip der erfindungsgemäßen Messung an einer Probelackierung 1.

Die Probelackierung besteht aus einem Träger 3, z.B. einer Blechtafel, und einer darauf aufgebrachten Lackschicht 2. Die Schichtdicke der dargestellten Lackschicht 2 hat einen schwellenartigen, symmetrischen Verlauf mit einem Maximum in der Mitte. Der Träger 3 wird im allgemeinen wie dargestellt eben sein, obwohl er grundsätzlich auch eine beliebig gekrümmte Oberfläche haben könnte. In Fall eines ebenen Trägers liegen indes einfachere Verhältnisse vor, da die Lackoberfläche unmittelbar dem Verlauf der Schichtdicke entspricht und daher die Neigung dieser Oberfläche und der Schichtdickegradient einander entsprechende Größen sind.

Würde sich der Trägergrund uneben ändern, so würden die Schichtdicke und ihr Gradient nicht allein durch die Lackoberfläche repräsentiert. Ein Grenzfall wäre dabei eine ebene Lackoberfläche über einem unebenen Träger. In diesem Fall gäbe es keine Oberflächenneigung und daher nur den isolierten Einfluß des Schichtdickegradienten.

Weiterhin sind Prüfpfade 4a und 4b dargestellt, von denen der eine 4a in x-Richtung, der andere 4b in y-Richtung verläuft. Auf den Pfaden sind exemplarisch Gradientenvektoren 5a, 5a' und 5b, 5b' eingezeichnet, die alle bei denselben Schichtdicken $SD_0$ liegen sollen. Die Gradienten liegen parallel zur Ebene des Trägers 3 und zeigen in die Richtung des maximalen Wachstums der Schichtdicke. Wenn die Messung entlang eines Prüfpfades 4a ausgeführt wird, so wird zunächst bei der Schichtdicke $SD_0$ mit einem positiven Gradienten 5a gemessen und anschließend bei derselben Schichtdicke $SD_0$ mit einem negativen Gradienten 5a'.

Ähnliches gilt für den Prüfpfad 4b, der in parallelen Abschnitten durchlaufen wird.

Neben den exemplarisch dargestellten Pfaden 4a, 4b sind auch zahlreiche andere Arten von Prüfpfaden möglich.

Die mathematische Definition der vektoriellen Gradienten $\underline{G}$ erfolgt über die Ableitung der Funktion $f(\underline{r})$, welche in einem Koordinatensystem mit (zweidimensionalen) Ortsvektor $\underline{r}$ die Oberfläche der Lackschicht 2 beschreibt, also

$$\underline{G} := \text{grad}(f) = \nabla f = df / d\underline{r}$$

Durch den Pfeil 6 ist die Beobachtungsrichtung eines Meßgerätes, z.B. eines farbmetrischen Gerätes symbolisiert. Während es grundsätzlich möglich ist, daß sich die Beobachtungsrichtung entlang des Prüfpfades ändert, ist es ein Vorteil des erfindungsgemäßen Verfahrens, daß sie konstant bleiben kann (d.h. nur parallel verschoben wird). Hierdurch vereinfacht sich die Führung der Meßgeräte erheblich. Die für die Messung erforderlichen Richtungsvariationen werden bei dieser Anordnung durch den speziellen erfindungsgemäßen Verlauf der Schichtdicke und des Prüfpfades erzielt.

Figur 2 zeigt schematisch die Auftragung der Schichtdicke SD(x) der Lackschicht 2 aus Figur 1 über der auf dem Prüfpfad 4a zurückgelegten Wegstrecke x. Erkennbar ist der schwellenförmige Verlauf mit den Gradienten $\underline{G}_1$ und $\underline{G}_2$ bei der Schichtdicke $SD_0$. Aufgrund des geradlinigen Verlaufes des Prüfpfades 4a quer zur Lackschwelle entsprechen die Gradienten in diesem Falle der Ableitung $dSD/dx$.

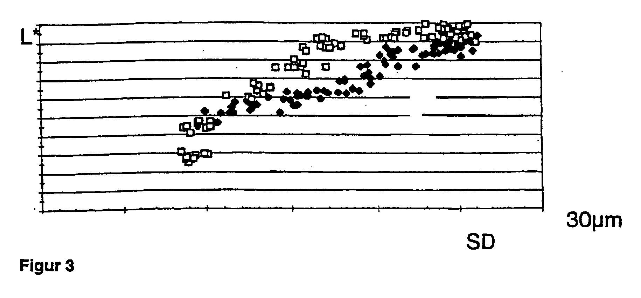

Figur 3 zeigt schließlich eine reale Messung der Helligkeit L* (CIELAB-System) nach dem in Figur 1 dargestellten Prinzip (Pfad 4a). Die Helligkeit ist in einem Diagramm in Abhängigkeit von der Schichtdicke SD aufgetragen. Die korrespondierenden Schichtdicken können entweder gleichzeitig mit der Helligkeit gemessen oder aber aus einem bekannten Zusammenhang zwischen Schichtdicke SD und auf dem Prüfpfad zurückgelegter Wegstrecke x (vgl. Figur 2) berechnet werden.

Die eingetragenen Meßwerte sind für den ansteigenden und den abfallenden Teil des Prüfpfades mit unterschiedlichen Symbolen dargestellt. Es gibt daher erkennbar für jede Schichtdicke $SD_0$ zwischen ca. 10 und 25 $\mu$m zwei Meßwerte zu zwei verschiedenen Gradienten. Dabei fällt auf, daß diese Meßwerte nach Art einer Hysterese divergieren, d.h., daß die Lackierung aus zwei um 180° gedrehten Blickrichtungen (und ansonsten gleichen Bedingungen) verschieden aussieht. Eine derartige Differenz ist indes nicht tolerierbar, was für den entsprechenden Lack unmittelbar anhand der einen erfindungsgemäßen Messung herausgefunden werden kann.

**Patentansprüche**

1.    Verfahren zur Bestimmung richtungsabhängiger Eigenschaften von Lackierungen, bei dem die Richtungsabhängigkeit der interessierenden Meßgröße vom Schichtdickegradienten erfaßt wird, wobei an einer Probelackierung entlang eines Prüfpfades mit einem oder mehreren Meßgeräten Messungen von Lackeigenschaften durchgeführt werden, wobei

a) mindestens ein Meßwert richtungsbezogen erfaßt wird und
b) es mindestens eine Schichtdicke der Probelackierung gibt, die zweimal und mit verschiedenen Schichtdickegradienten entlang des Prüfpfades auftritt.

2.    Verfahren nach Anspruch 1, **dadurch gekennzeichnet, daß** die entsprechenden Schichtdickegradienten unterschiedliches Vorzeichen haben.

3.    Verfahren nach einem der Ansprüche 1 oder 2, **dadurch gekennzeichnet, daß** die Schichtdicke entlang des Prüfpfades ein Minimum oder ein Maximum hat.

4.    Verfahren nach einem der Ansprüche 1 bis 3, **dadurch gekennzeichnet, daß** die Schichtdicke sich entlang des Prüfpfades symmetrisch ändert, vorzugsweise indem sie glocken- oder parabetförmig ist.

5.    Verfahren nach einem der Ansprüche 1 bis 4, **dadurch gekennzeichnet, daß** die Probelackierung durch Sprühen entlang einer Geraden hergestellt wird.

6.    Verfahren nach einem der Ansprüche 1 bis 5, **dadurch gekennzeichnet, daß** der Prüfpfad ohne Umkehrpunkte, vorzugsweise geradlinig verläuft.

7.    Verfahren nach einem der Ansprüche 1 bis 6, **dadurch gekennzeichnet, daß** hiermit Schichtdicke, Verlauf, Farbton, Haze und/oder Glanz der Probelackierung gemessen wird.

**Claims**

1.    Method of determining direction-dependent properties of coatings, in which the direction dependence of the measurement variable of interest on the coat-thickness gradient is recorded,
in which measurements of coating properties are made along a test track on a sample coating using one or more measuring instruments,
wherein

a) at least one measurement is recorded in relation to direction, and
b) the sample coating has at least one coat thickness which occurs twice and with different coat-thickness gradients along the test track.

2.    Method according to Claim 1, **characterized in that** the corresponding coat-thickness gradients are different in sign.

3.    Method according to one of Claims 1 and 2, **characterized in that** the coat thickness has a minimum or a maximum along the test track.

4.    Method according to one of Claims 1 to 3, **charac-**

**terized in that** the coat thickness changes symmetrically along the test track, preferably being bell-shaped or parabolic.

5. Method according to one of Claims 1 to 4, **characterized in that** the sample coating is produced by spraying along a straight line.

6. Method according to one of Claims 1 to 5, **characterized in that** the test track extends without reversals, preferably linearly.

7. Method according to one of Claims 1 to 6, **characterized in that** it is used to measure coat thickness, evenness, shade, haze, and/or gloss of the sample coating.

## Revendications

1. Procédé de détermination de propriétés de laquages dépendantes de la direction, dans lequel on détecte la dépendance directionnelle entre la grandeur de mesure intéressante et le gradient d'épaisseur de couche, des mesures de propriétés de laque étant, à l'aide d'un ou de plusieurs appareils de mesure, effectuées sur un laquage échantillon le long d'une piste d'examen, procédé dans lequel

    a) au moins une valeur de mesure est détectée par rapport à la direction et
    b) il y a au moins une épaisseur de couche du laquage échantillon qui apparaît à deux reprises et avec différents gradients d'épaisseur de couche le long de la piste d'examen.

2. Procédé suivant la revendication 1, **caractérisé en ce que** les gradients d'épaisseur de couche correspondants ont un signe différent.

3. Procédé suivant l'une des revendications 1 et 2, **caractérisé en ce que** l'épaisseur de couche le long de la piste d'examen présente un minimum ou un maximum.

4. Procédé suivant l'une des revendications 1 à 3, **caractérisé en ce que** l'épaisseur de couche se modifie de manière symétrique le long de la piste d'examen, de préférence en forme de cloche ou de parabole.

5. Procédé suivant l'une des revendications 1 à 4, **caractérisé en ce que** le laquage échantillon est préparé par pulvérisation le long d'une droite.

6. Procédé suivant l'une des revendications 1 à 5, **caractérisé en ce que** la piste d'examen s'étend sans points de rebroussement, de préférence de manière linéaire.

7. Procédé suivant l'une des revendications 1 à 6, **caractérisé en ce qu'**on mesure ainsi l'épaisseur de couche, l'allure, la teinte, le trouble et/ou le brillant du laquage échantillon.

**Figur 1**

**Figur 2**

**Figur 3**